# EUROPEAN PATENT APPLICATION

(11) **EP 2 058 503 A2**
(43) Date of publication of application: **13.05.2009**
(21) Application number: 08011941.5
(22) Date of filing: 02.07.2008
(51) Int. Cl.: F02M 21/02, F02M 37/08

(54) **External inline LPG fuel pump**

(30) Priority: 12.11.2007 KR 20070114892; 17.12.2007 KR 20070132739; 17.12.2007 KR 20070132740; 04.03.2008 KR 20080020121
(71) Applicant: KOREA INSTITUTE OF MACHINERY & MATERIALS, Yusung-gu Daejeon City (KR)
(72) Inventor: Kim, Chang Up, Yusung-Gu Daejeon City (KR); Park, Chul Woong, Yusung-Gu Daejeon City (KR); Choi, Kyo Nam, Yusung-Gu Daejeon City (KR); Kang, Kern Yong, Yusung-Gu Daejeon City (KR); Oh, Seung Mook, Yusung-Gu Daejeon City (KR); Lee, An Sung, Yusung-Gu Daejeon City (KR)
(74) Representative: Hertz, Oliver

(57) **Abstract**

There is provided an external inline LPG fuel pump, and more particularly, an external inline LPG fuel pump; in which bushings are installed at first and second shafts (32,36) of a motor (30) to be fixed inside a housing (10), a ball (35) is completely coupled to an end of the first shaft (32) to prevent the motor (30) from being shaken due to the bushings, and another ball is inserted into an end of the second shaft (36) to fix the motor (30), thereby preventing the durability of the fuel pump from deteriorating by wear of a bushing part, a pumping part (20) and an inside of the housing (10) even though an LPG fuel is introduced when the motor (30) is driven, prolonging the life of the fuel pump and reducing the repair and exchange costs involved with the fuel pump; in which a case inside which the housing (10) is positioned is formed and a partition is installed inside the case, thereby cooling the high-temperature LPG fuel discharged through an outlet of the housing (10) to reduce heat load and improving the durability of a device receiving the LPG fuel transferred from the fuel pump; in which the LPG fuel is introduced from the side of the housing (10) and is inline carried by a carrier, thereby improving an inhale and an efficiency of a flow at the inlet.

## Description

### Technical Field.

The present invention relates to an external inline LPG fuel pump, and more particularly, an external inline LPG fuel pump; in which bushings are installed at first and second shafts of a motor to be fixed inside a housing, a ball is completely coupled to an end of the first shaft to prevent the motor from being shaken due to the bushings, and another ball is inserted into an end of the second shaft to fix the motor, thereby preventing the durability of the fuel pump from deteriorating by wear of a bushing part, a pumping part and an inside of the housing even though an LPG fuel is introduced when the motor is driven, prolonging the life of the fuel pump and reducing the repair and exchange costs involved with the fuel pump; in which a case inside which the housing is positioned is formed and a partition is installed inside the case, thereby cooling the high-temperature LPG fuel discharged through an outlet of the housing to reduce heat load and improving the durability of a device receiving the LPG fuel transferred from the fuel pump; in which the LPG fuel is introduced from the side of the housing and is inline carried by a carrier, thereby improving an inhale through an inlet and an efficiency of a flow at the inlet; in which the carrier comprises a through-aperture formed in its center so as to be coupled to the shaft of the motor, a round protrusion part formed at one surface around the through-aperture, and a number of groove parts having various shapes formed in the circumferential direction of the round protrusion part around the through-aperture, thereby maintaining the equal pressure at both sides of the carrier when the fuel is introduced through the groove parts, to prevent the carrier from being pushed to one side by the pressure of the fuel introduced into the fuel pump, and therefore preventing noise and damage caused by friction when the carrier is rotated.

### Background Art.

In general, a pump is a device used to move a fluid by putting energy. Types of pumps are typically classified into turbo pumps, positive displacement pumps, and special pumps using the other methods. A turbo pump supplies kinetic energy to a fluid by rotation of an impeller. A positive displacement pump causes a liquid to move by drawing or discharging the fluid by periodically changing its special volume.

Among the aforementioned pumps, positive displacement pumps are used as automobile fuel pumps because the pressure of oil is high even though an amount of the used oil is small.

A liquid phase LPG injection (LPLI) method has been used to use LPG which is an environment friendly fuel as an automobile fuel. In a conventional method, a pump built in a fuel tank (hereinafter, referred to as the 'built-in pump') has been used to inject the liquid phase LPG. However, when the built-in pump is out of order, the fuel tank has to be replaced to fix the built-in pump. Therefore, there has been proposed an external fuel pump being installed in a fuel line.

In the fuel pump, a carrier rotating inside a case is formed to carry an introduced fuel. The carrier is rotated by a motor and carries the introduced fuel to one side. (In the conventional art, the carrier is used as a rotary vane.)

However, the aforementioned conventional external fuel pump pumps and transfers the LPG fuel to an engine by driving a shaft formed in the motor. A bearing is used inside of the fuel pump so that the shaft is rotated at its position without being shaken. However, the bearing is continuously worn against an inner surface of the fuel pump by the rotation of the shaft. Therefore, when the fuel pump is used for a long time, the bearing is seriously worn away and a rotation force of the motor decreases, thereby lowering the efficiency of the fuel pump.

Moreover, when the bearing is worn away, it needs to be repaired or replaced and increases the maintenance cost, thereby decreasing the productivity and the demand of the external fuel pump.

Moreover, when the rotary vane carries the introduced fuel to one side; the pressure of the fuel increases to push the rotary vane in the other side (opposing to the side to which the fuel is carried) so that the rotary vane comes into contact with the case positioned outside. Therefore, as the rotary vane continuously rotates while contacting with the case, a frictional force increases, thereby causing noise and damage.

### .Disclosure.

### .Technical Problem.

Therefore, the present invention has been made to solve the above problems, and it is an aspect of the present invention to provide an external inline LPG fuel pump in which bushings are installed at first and second shafts of a motor to be fixed inside a housing, a ball is completely coupled to an end of the first shaft to prevent the motor from being shaken due to the bushings, and another ball is inserted into an end of the second shaft to fix the motor, thereby preventing the durability of the fuel pump from deteriorating by wear of a bushing part, a pumping part and an inside of the housing even though an LPG fuel is introduced when the motor is driven, prolonging the life of the fuel pump and reducing the repair and exchange costs involved with the fuel pump.

It is another aspect of the present invention to provide an external inline LPG fuel pump in which a case inside which the housing is positioned is formed and a partition is installed inside the case, thereby cooling the high-temperature LPG fuel as discharged through an outlet of the housing, reducing heat load and improving the durability of a device receiving the LPG fuel transferred from the fuel pump.

It is another aspect of the present invention to provide an external inline LPG fuel pump in which the LPG fuel is introduced from the side of the housing and is inline carried by a carrier, thereby improving an inhale through an inlet and an efficiency of a flow at the inlet.

It is another aspect of the present invention to provide an external inline LPG fuel pump in which the carrier comprises a through-aperture formed in its center so as to be coupled to the shaft of the motor, a round protrusion part formed at one surface around the through-aperture, and a number of groove parts having various shapes formed in the circumferential direction of the round protrusion part around the through-aperture, thereby maintaining the equal pressure, resulting in both sides of the carrier having the equal pressure when the fuel is introduced through the groove parts, preventing the carrier from being pushed to one side by the pressure of the fuel introduced into the fuel pump and therefore preventing noise and damage caused by friction when the carrier is rotated.

### .Technical Solution.

In accordance with the present invention, the above and other aspects can be accomplished by an external inline LPG fuel pump which compresses and pumps an LPG fuel, comprising: a housing including an inlet and an outlet respectively formed at opposite sides of the housing, to introduce and discharge the LPG fuel; a pumping part formed at the side towards the inlet of the housing, to introduce the LPG fuel into the housing; and a motor part positioned inside the housing and including a first shaft connected to the pumping part and including an end of the first shaft formed integrally with a ball so that the pumping part is driven, a second shaft positioned to be opposed to the first shaft and supported by the side towards the outlet of the housing, and an electric motor connected between the first shaft and the second shaft generating a rotation force by electricity.

### .Advantageous Effects.

In accordance with the present invention, in an external inline LPG fuel pump, bushings are installed at first and second shafts of a motor to be fixed inside a housing, a ball is completely coupled to an end of the first shaft to prevent the motor from being shaken due to the bushings, and another ball is inserted into an end of the second shaft to fix the motor. Accordingly, there are the effects of preventing the durability of the fuel pump from deteriorating by wear of a bushing part, a pumping part and an inside of the housing even though an LPG fuel is introduced when the motor is driven, prolonging the life of the fuel pump, and reducing the repair and exchange costs involved with the fuel pump.

Furthermore, in the external inline LPG fuel pump, a case inside which the housing is positioned is formed and a partition is installed inside the case. Accordingly, there are the effects of cooling the high-temperature LPG fuel as discharged through an outlet of the housing, reducing heat load, and improving the durability of a device receiving the LPG fuel transferred from the fuel pump.

Furthermore, in the external inline LPG fuel pump, the LPG fuel is introduced from the side of the housing and is inline carried by a carrier. Accordingly, there are the effects of improving an inhale through an inlet and an efficiency of a flow at the inlet.

Furthermore, in the external inline LPG fuel pump, the carrier comprises a through-aperture formed in its center so as to be coupled to the shaft of the motor, a round protrusion part formed at one surface around the through-aperture, and a number of groove parts having various shapes formed in the circumferential direction of the round protrusion part around the through-aperture. Accordingly, there are the effects of maintaining the equal pressure at both sides of the carrier when the fuel is introduced through the groove parts, preventing the carrier from being pushed to one side by the pressure of the fuel introduced into the fuel pump, and preventing noise and damage caused by friction when the carrier is rotated.

### .Description of Drawings.

These and other aspects and advantages of the present invention will become apparent and more readily appreciated from the following description of the embodiments, taken in conjunction with the accompanying drawings, in which:
FIG. 1 is a sectional view of an external LPG fuel pump according to one embodiment of the present invention;
FIG. 2 is an enlarged sectional view of Portion "A" in FIG. 1
FIG. 3 is a sectional view of a shaft into which a ball is inserted in the external LPG fuel pump according to one embodiment of the present invention;
FIG. 4 is a perspective view of a dissembled housing separated from an external LPG fuel pump according to a second embodiment of the present invention;
FIG. 5 is a sectional view of the external LPG fuel pump according to the second embodiment;
FIG. 6 is a perspective view of a first plate in the external LPG fuel pump according to the second embodiment;
FIG. 7 is an enlarged sectional view of a housing formed integrally with a ball in an external LPG fuel pump according to a third embodiment of the present invention;
FIG. 8 is a perspective view of a carrier in the external LPG fuel pump according to one embodiment;
FIG. 9 is a plan view of the carrier in the external LPG fuel pump according to one embodiment;
FIG. 10 is a plan view of a carrier in an external LPG fuel pump according to a fourth embodiment of the present invention;
FIG. 11 is a plan view of a carrier in an external LPG fuel pump according to a fifth embodiment of the present invention; and
FIG. 12 is a plan view of a carrier in an external LPG fuel pump according to a sixth embodiment of the present invention.

### Best Mode.

In accordance with an embodiment of the present invention, there is provided an external inline LPG fuel pump which compresses and pumps an LPG fuel, comprising: a housing including an inlet and an outlet respectively formed at opposite sides of the housing, to introduce and discharge an LPG fuel; a pumping part formed at the side towards the inlet of the housing, to introduce the LPG fuel into the housing; and a motor part positioned inside the housing and including a first shaft connected to the pumping part and including an end of the first shaft formed integrally with a ball so that the pumping part is driven, a second shaft positioned to be opposed to the first shaft and supported by the side towards the outlet of the housing, and an electric motor connected between the first shaft and the second shaft generating a rotation force by electricity.

### .Mode for Invention.

Hereinafter, embodiments of the present invention will be described in detail with reference to the accompanying drawings.

It will be understood that words or terms used in the specification and claims shall not be interpreted as the meaning defined in commonly used dictionaries. It will be further understood that the words or terms should be interpreted as having a meaning that is consistent with their meaning in the context of the relevant art and the technical idea of the invention, based on the principle that an inventor may properly define the meaning of the words or terms to best explain the invention.

The present invention may be embodied in different forms and should not be construed as limited to the embodiments set forth herein. Rather, these embodiments are provided as teaching examples of the invention. Therefore, it will be understood that the scope of the invention is intended to include various modifications and alternative arrangements within the capabilities of persons skilled in the art using presently known or future technologies and equivalents.

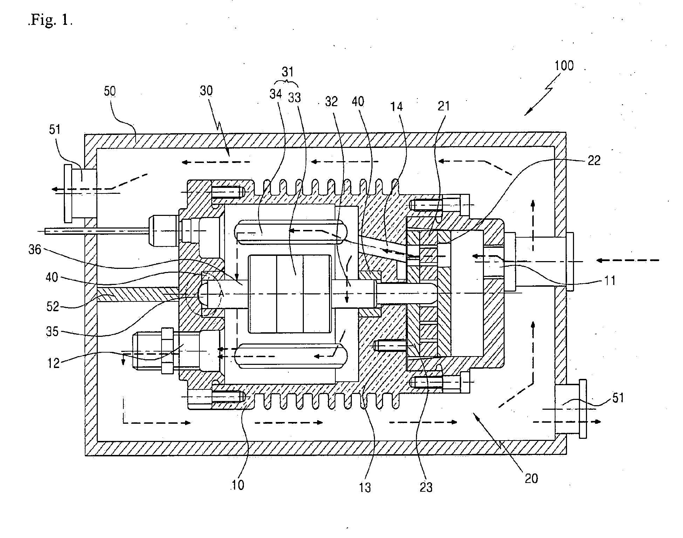

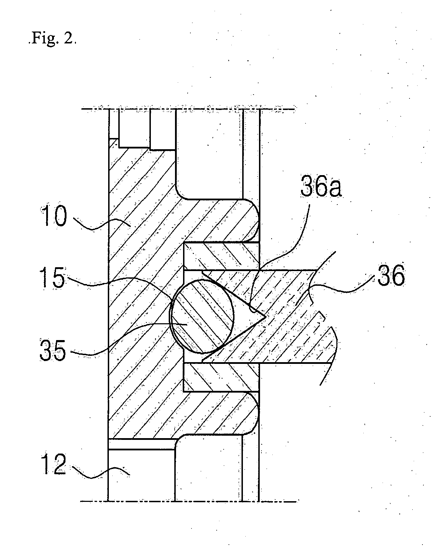

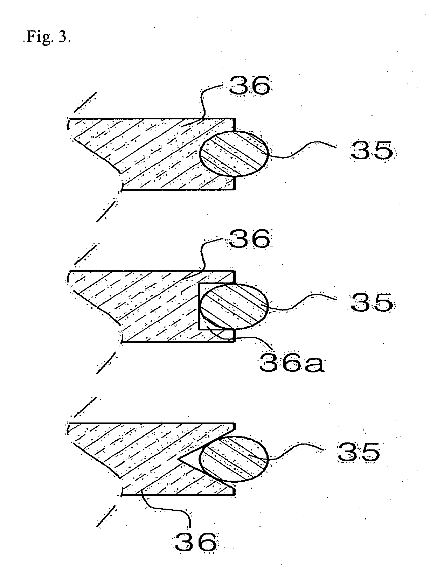

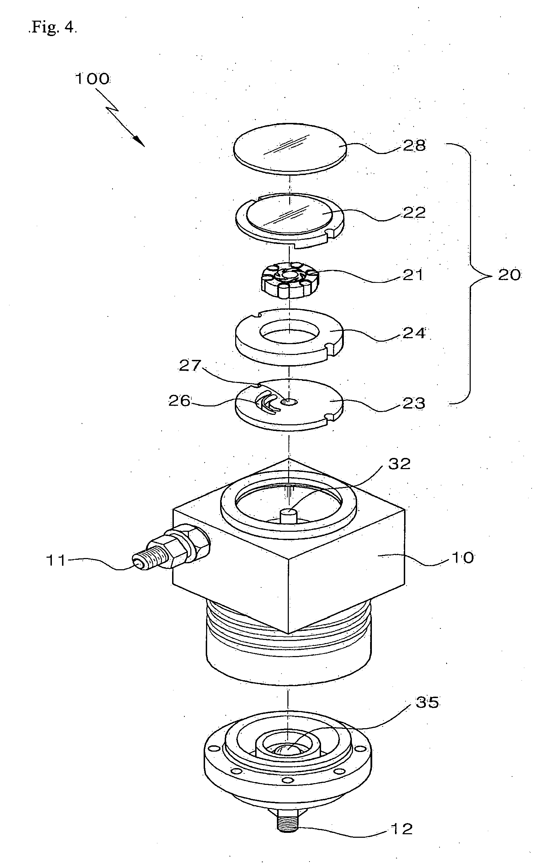

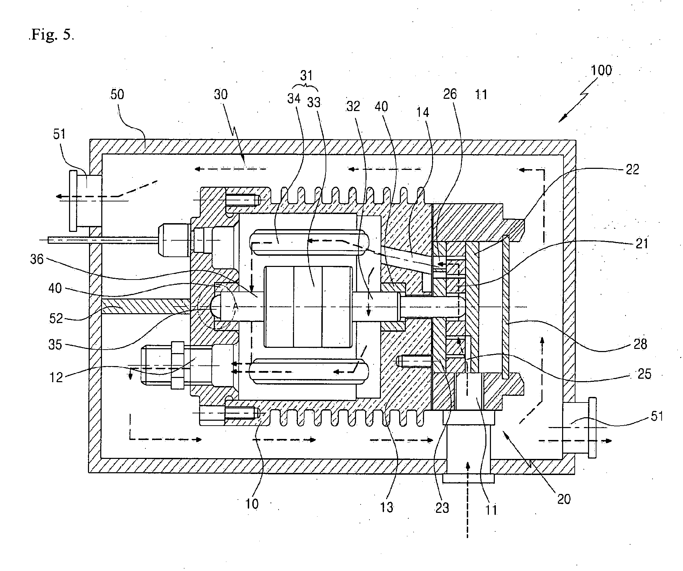

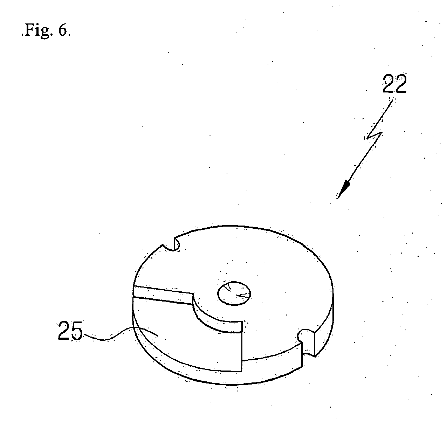

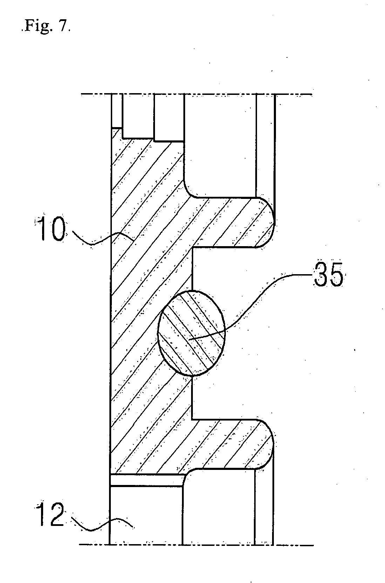

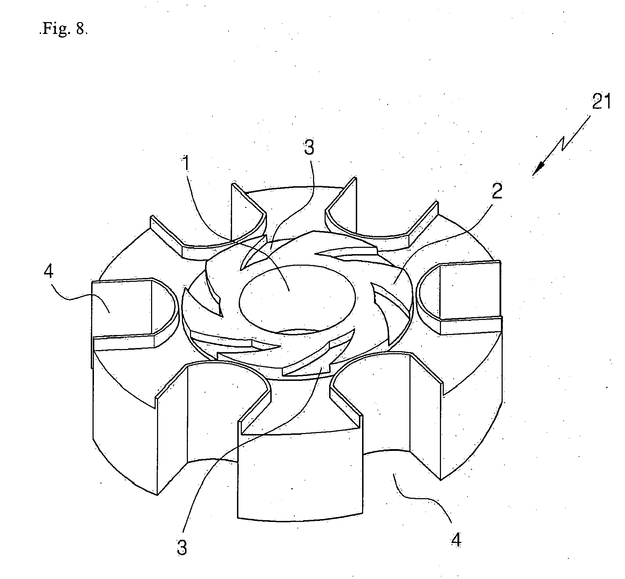

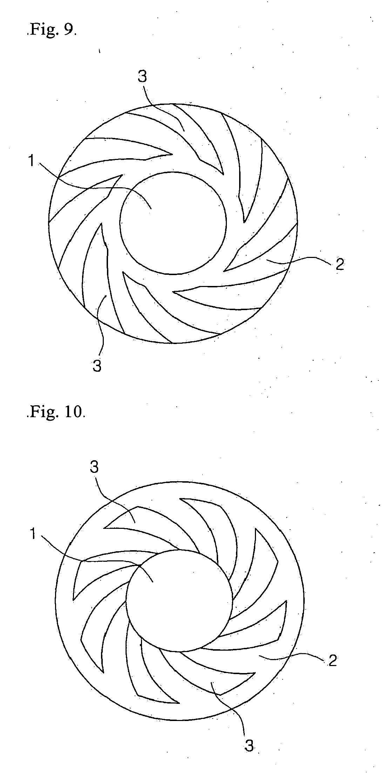

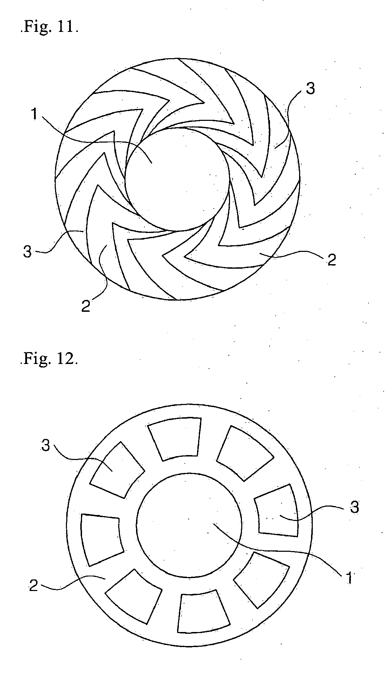

FIG. 1 is a sectional view of an external LPG fuel pump according to one embodiment of the present invention, FIG. 2 is an enlarged sectional view of Portion "A" in FIG. 1, FIG. 3 is a sectional view of a shaft into which a ball is inserted according to one embodiment of the present invention, FIG. 4 is a perspective view of a dissembled housing separated from an external LPG fuel pump according to a second embodiment of the present invention, FIG. 5 is a sectional view of the external LPG fuel pump according to the second embodiment, FIG. 6 is a perspective view of a first plate according to the second embodiment, FIG. 7 is an enlarged sectional view of a housing formed integrally with a ball in an external LPG fuel pump according to a third embodiment of the present invention, FIG. 8 is a perspective view of a carrier according to one embodiment, FIG. 9 is a plan view of the carrier according to one embodiment, FIG. 10 is a plan view of a carrier in an external LPG fuel pump according to a fourth embodiment of the present invention, FIG. 11 is a plan view of a carrier in an external LPG fuel pump according to a fifth embodiment of the present invention, and FIG. 12 is a plan view of a carrier in an external LPG fuel pump according to a sixth embodiment of the present invention.

### (First Embodiment)

As illustrated in FIG. 1, an external LPG fuel pump 100 according to the present invention comprises a housing 10, a pumping part 20, a motor part 30 and a case 50.

The housing 10 comprises an inlet 11 and an outlet 12 formed at its opposite sides, to introduce and discharge an LPG fuel. The inlet 11 of the housing 10 is connected to a fuel tank (not shown) and the outlet 12 of the housing 10 is connected to a fuel injector (not shown) of an engine.

That is, the fuel pump 100 according to this embodiment is an external inline fuel pump to be installed in a fuel line connecting the fuel tank to the fuel injector.

Inside the housing 10, the pumping part 20 is positioned in a space formed at the side towards the inlet 11, and the motor part 30 is positioned in another space at the side towards the outlet 12. A guide layer 13 is formed to divide the inner space of the housing 10 into the side of the pumping part 20 and the side of the motor part 30. A fuel channel 14 is formed in the guide layer 13 so that the LPG fuel is carried to the motor part 30 through the pumping part 20. The fuel channel 14 is formed at a predetermined angle so that the LPG fuel is smoothly carried to the motor part 30 by the rotation of the pumping part 20.

The pumping part 20 is connected to a first shaft 32 of the motor part 30 and comprises a carrier 21 rotated by the first shaft 32 so as to introduce the LPG fuel through the inlet 11 and to carry the introduced LPG fuel to the inside of the housing 10, a roller 24 formed to surround a circumferential surface of the carrier 21, a first plate 22 positioned at one side of the carrier 21, and a second plate 23 positioned at the other side of the carrier 21. The carrier 21 may use a roller vane or gear rotor.

With reference to FIGS. 2 and 3, the first shaft 32 is coupled to the carrier 21 and an end of the first shaft 32 contacts with the first plate 22. The end of the first shaft 32 is completely coupled with a ball to form a round arc shape integrally combined at the end of the first shaft 32. When the first shaft 32 is rotated, the friction of the first shaft 32 and the first plate 22 is reduced by the round arc end of the first shaft 32, thereby preventing wear, damage or the like. Further, a groove (not shown) is formed at one end of the first plate 22 contacting the end of the first shaft 32 so that the first shaft 32 is not displaced to its left or right side.

Further, after the second plate 23, the roller 24, the carrier 21 and the first plate 22 are sequentially stacked to be combined together, the pumping part 20 is closed by a cover 28 so that these elements are prevented from being separated outwardly and the LPG gas flowed into the housing 10 is prevented from discharged outwardly, except for the outlet 12.

As illustrated in FIG. 8, the structure of the carrier 21 comprises a through-aperture 1, a round protrusion part 2, a number of groove parts 3, and a coupling part 4. The through-aperture 1 is formed in the center so as to be coupled to the first shaft 32 of the motor part 30. The round protrusion part 2 is formed at one surface around the through-aperture 1. The groove parts 3 are formed in the circumferential direction of the round protrusion part 2 around the through-aperture 1 to maintain the equal pressure on both sides of the carrier 21 to prevent any noise and damage caused by friction when the carrier 21 is pushed to one side by the pressure of the fuel. The coupling part 4 is formed at the outer circumferential surface of the carrier 21 to receive a rotation member (not shown) formed to reduce the friction of the outer circumferential surface of the carrier 21 when the carrier 21 is rotated. The coupling part 4 protrudes in the direction in which the round protrusion part 2 is formed and guides the introduced fuel to flow into the groove parts 3.

The round protrusion part 2 is formed to protrude in the middle of the top of the carrier 21 and the through-aperture 1 to be coupled to the driving shaft of the motor is formed in the center of the round protrusion part 2.

Then, the round protrusion part 2 protrudes by a predetermined height so that the groove parts 3 are formed inwardly from the outer circumferential surface. The fuel flowing into the fuel pump is introduced through the groove parts 3.

The groove parts 3 are formed on the top surface of the round protrusion part 2 and the fuel is introduced into the groove parts 3, thereby increasing the pressure inside the groove parts 3 and pushing the carrier 21 to the side opposing to the groove parts 3.

The reason for pushing the carrier 2 to the side opposing to the groove parts 3 by increasing the pressure of the fuel through the groove parts 3 is; the fuel carried to one side by the carrier 21 when the fuel is introduced into the fuel pump produces strong pressure in the direction opposing to the direction in which the fuel is carried, and pushes the carrier 21 to one side. Then, the carrier 21 contacts with a case (not shown) positioned outside and the frictional force increases by the rotation of the carrier 21, thereby causing noise and damage.

The groove parts 3 are formed to maintain the equal pressure at both sides of the carrier 21 against the pressure of the fuel being carried, thereby preventing the carrier 21 from contacting with the case (not shown) and therefore preventing the noise and damage.

As illustrated in FIG. 9, a number of the groove parts 3 are formed in the circumferential direction on the top of the round protrusion part 2. Each groove is formed from an outer circumferential edge of the round protrusion part 2 towards an inner circumferential edge of the round protrusion part 2 having a predetermined length. The groove parts 3 are formed in a spiral shape on the whole.

Each groove is formed of its width progressively narrower from the outer circumferential edge of the round protrusion part 2 towards the inner circumferential edge of the round protrusion part 2, which introduces the fuel to flow into the groove parts 3 and increases pressure to push the carrier 21 to the side opposing to the groove part 3. The above shape of the groove leads pressure of the fuel most increased in the most inner side of the groove.

The motor part 30 comprises a first shaft 32, a second shaft 36, and an electric motor 31. The first shaft 32 is connected to the pumping part 20 and an end of the first shaft 32 is formed integrally with a ball so that the pumping part 20 is driven. The second shaft 36 is formed to be opposed to the first shaft 32 and is supported by the outlet 12 side of the housing 10. The electric motor 31 is connected between the first shaft 32 and the second shaft 36 and generates a rotation force by electricity. The motor part 30 is positioned inside the housing 10.

The motor part 30 may any actuator in addition to the electric motor 31. The electric motor comprises a permanent magnet 34 and a rotor 33 positioned in a region of a magnetic field generated by the permanent magnet 34. Since the electric motor 31 is obvious to those skilled in the art to which the present invention pertains, no further description thereof will be presented.

The first shaft 32 and the second shaft 36 are formed to respectively protrude by a predetermined distance from both sides of the electric motor 31. The first shaft 32 is installed through the guide layer 13 so as to fix the electric motor 31 inside the housing 10. One end of the second shaft 36 is inserted by a predetermined distance into the housing 10 at the side towards the outlet 12, to fix the electric motor 31. Then, a bushing 40 is fitted around the outer circumferential surface of each of the first and second shafts 32 and 36 being contacted with the housing 10, thereby minimally reducing the friction for the first and second shafts 32 and 36 to smoothly rotate. Since the bushing 40 is obvious to those skilled in the art, no further description thereof will be presented.

The bushing 40 is positioned at the housing 10 and the outer circumferential surface of each of the first and second shafts 32 and 36 but it is not fixed. Therefore, when the first and second shafts 32 and 36 are rotated, the bushing 40 is spaced apart from the housing 10 at a predetermined distance and therefore no wear between the bushing 40 and the housing 10 occurs. Therefore, the durability of the fuel pump 100 is improved and the life of the fuel pump 100 is prolonged.

However, referring to FIGS. 2 and 3, when the bushing 40 is spaced apart from the housing 10, there is occurred a problem in that the electric motor 31 and the first and second shafts 32 and 36 of the motor part 30 are shaken and not secured. To prevent the aforementioned problem, a ball 35 is inserted into the end of the second shaft 36 (that is, at the end of the second shaft 36 contacting with the housing 10 at the side towards the outlet 12). The ball 35 is inserted but not fixed, to minimize the friction against the housing 10 when the second shaft 36 is rotated. Further, a coupling groove 36a is formed at the end of the second shaft 36, to receive the ball 35.

When the ball 35 is inserted into the end of the second shaft 36, the electric motor 31 and the second shaft 36 of the motor part 30 are prevented from shaking and the wear between the motor shaft and the housing 10 is reduced.

Further, an insertion groove 15 is formed into the housing 10 at the outlet 12 side to prevent the ball 35 inserted in the end of the second shaft 36 from being separated.

The ball 35 may be detachably inserted into the end of the second shaft 35 or may be attached to the end of the second shaft 35 in many ways, for example, to be fixed integrally with the second shaft 36.

The ball 35 may selectively use any one of silicon carbide (SiC), alumina (Al₂O₃) and zirconia (ZrO₂) which is same as the material of the first and second shafts 32 and 36 of the motor part 30.

The case 50 is hollow inside so that the housing 10 is installed inside. Between the case 50 and the housing 10, a high-temperature LPG fuel which is discharged through the outlet 12 of the housing 10 through the pumping part 20 and the motor part 30 is cooled, to reduce heat load of the LPG fuel. Further, a number of outlets 51 are formed through one end of the case 50, to discharge the uniformly cooled LPG fuel from the case 50 outwardly.

Inside the case 50, a partition 52 is formed to circulate the high-temperature LPG fuel through a number of channels so as to be cooled. The partition 52 also is supported by the inner side of the case 50 and the outer side of the housing 10 and guides the LPG fuel.

### (Second Embodiment)

As illustrated in FIGS. 4 and 5, a housing 10 comprises an inlet 11 and an outlet 12. The inlet 11 is formed at one end side of the housing 10, to introduce an LPG fuel. The outlet 12 is formed at another end of the housing 10. The inlet 11 of the housing 10 is connected to a fuel tank (not shown), and the outlet 12 of the housing 10 is connected to a fuel injection (not shown) of an engine.

With reference to FIGS. 4 and 6, a pumping part 20 is connected to a first shaft 32 of a motor part 30. The pumping part 20 comprises a carrier 21, a roller 24, a first plate 22, and a second plate 23. The carrier 21 rotated by the first shaft 32 introduces and carries the LPG fuel from the inlet 11 of the housing 10 into the housing 10. The roller 24 is formed to surround the outer circumferential surface of the carrier 21. The first plate 22 is positioned at one side of the carrier 21 and includes an intake groove 25 formed in a fan-shape at a lower surface spanned over both lateral sides of the first plate 22 so that the LPG fuel introduced by the carrier 21 be flowed into in a lateral direction. The second plate 23 is positioned at the other side of the carrier 21. The second plate 23 includes a transportation opening 26 and a through-aperture 27. The transportation opening 26 is formed to be curved so that the LPG fuel through the intake groove 25 of the first plate 22 introduced by the carrier 21 is transferred in the vertical direction. The through-aperture 27 is formed in the center of the second plate 23. The first shaft 32 passes through the through-aperture 27 and is combined with the carrier 21.

The other constitution of the external LPG fuel pump according to the second embodiment is the same as that of the external LPG fuel pump according to the first embodiment.

### (Third Embodiment)

As illustrated in FIG. 7, a ball 35 is combined integrally with a center part of a housing 10 in the side of an outlet 12 and contacts with an end of a second shaft 36. Therefore, the second shaft 36 is smoothly rotated by the ball 35. The ball 35 is attached to the housing 10 when the housing 10 is manufactured.

The other constitution of the external LPG fuel pump according to the third embodiment is the same as that of the external LPG fuel pump according to the first embodiment.

### (Fourth Embodiment)

As illustrated in FIG. 10, a number of groove parts 3 are formed in the circumferential direction on the top of a round protrusion part 2. Each groove is formed from an inner circumferential edge of the round protrusion part 2 towards an outer circumferential edge of the round protrusion part 2 as shown, having a predetermined length. The groove parts 3 are formed in a spiral shape on the whole.

Each groove is formed of its width progressively becomes wider from the inner circumferential edge of the round protrusion part 2 towards the outer circumferential edge of the round protrusion part 2, which introduces the fuel to flow into the groove parts 3 and increases pressure to push a carrier 21 to the side opposing to the groove parts 3. The above shape of the groove leads pressure of the fuel to be increased most in the most outer side of the groove.

The other constitution of the external LPG fuel pump according to the fourth embodiment is the same as that of the external LPG fuel pump according to the first embodiment.

### (Fifth Embodiment)

As illustrated in FIG. 11, a number of groove parts 3 are formed in the circumferential direction on the top of a round protrusion part 2. Each groove is formed so as to be connected from an outer circumferential surface of a round protrusion part 2 to an inner circumferential edge of the round protrusion part 2 as shown.

Each groove is formed with its width progressively becomes narrower towards the inner circumferential edge of the round protrusion part 2, which introduces a fuel to flow into the groove parts 3 and increases pressure to push a carrier 21 to the side opposing to the groove parts 3. The groove parts 3 are formed in a herringbone shape on the whole, wherein the herringbone shape is formed in the shape of "<".

The other constitution of the external LPG fuel pump according to the fifth embodiment is the same as that of the external LPG fuel pump according to the first embodiment.

### (Sixth Embodiment)

As illustrated in FIG. 12; a number of groove parts 3 are formed in the circumferential direction on the top of a round protrusion part 2. The groove parts 3 are formed on the top of the round protrusion part 2 in a multi stage. In other words, each groove is independently formed without connecting to an outer or inner circumferential edge on the top of the round protrusion part 2. This type of the groove parts 3 is called a step-pocket. Further, each groove is formed in the planar fan-shape.

The other constitution of the external LPG fuel pump according to the sixth embodiment is the same as that of the external LPG fuel pump according to the first embodiment.

## Claims

1. An external inline LPG fuel pump which compresses and pumps an LPG fuel, comprising:
a housing (10) including an inlet (11) and an outlet (12) respectively formed at opposite sides of the housing (10), to introduce and discharge the LPG fuel;
a pumping part (20) formed at the side towards the inlet (11) of the housing (10), to introduce the LPG fuel into the housing (10); and
a motor part (30) positioned inside the housing (10) and comprising:
a first shaft (32) connected to the pumping part (20) and including its end formed integrally with a ball so that the pumping part (20) is driven;
a second shaft (36) positioned to be opposed to the first shaft (32) and supported by the side towards the outlet (12) of the housing (10); and
an electric motor (31) connected between the first shaft (32) and the second shaft (36) generating a rotation force by electricity.

2. The external inline LPG fuel pump according to claim 1, wherein the pumping part (20) comprises:
a carrier (21) connected to the first shaft (32) of the motor part (30) and rotated by the first shaft (32), to introduce the LPG fuel through the inlet (11) of the housing (10) and to carry the LPG fuel into the housing (10);
a roller (24) formed to surround an outer circumferential surface of the carrier (21);
a first plate (22) positioned at one side of the carrier (21) and including an intake groove (25) formed in a fan-shape on a lower surface of the first plate (22) spanned over its both lateral sides, so that the LPG fuel introduced by the carrier (21) is guided to flow into in a lateral direction; and
a second plate (23) positioned at the other side of the carrier (21) and including a transportation opening (26) and a through-aperture (27), wherein the transportation opening (26) is formed to be curved so that the LPG fuel through the intake groove 25 of the first plate 22 introduced by the carrier 21 is transferred in the vertical direction and the through-aperture (27) is formed in the center of the second plate (23) so that the first shaft (32) passes through the through-aperture (27) so as to be connected to the carrier (21).

3. The external inline LPG fuel pump according to claim 2, wherein the first plate (22) further comprises: a groove formed at the center part of the first plate (22) contacting the end of the first shaft (32) for the first shaft (32) to be not displaced from its right or left.

4. The external inline LPG fuel pump according to claim 1, wherein the motor part (3), comprising the electric motor (31) generating the rotation force by electricity, and the first and second shafts (32) and (36) passing through the electric motor (31) to transfer the rotation force of the electric motor (31), further comprising a number of bushings (40) positioned around the first and second shafts (32) and (36) contacting with the housing (10) so that the first and second shafts (32) and (36) are rotated white fixing the electric motor (31) inside the housing (10).

5. The external inline LPG fuel pump according to claim 4, wherein the bushings (40) through which the first and second shafts (32) and (36) pass to be positioned in the housing (10) are not worn away when the first and second shafts (32) and (36) are rotated, by being spaced apart from the housing (10) at a predetermined distance.

6. The external inline LPG fuel pump according to claim 1, wherein the second shaft (36) comprises a ball (35) inserted into an end contacting with the housing (10) in the side towards the outlet (12) so that the electric motor (31) is prevented from being shaken when it is fixed inside the housing (10) and the second shaft (36) is smoothly rotated, and an insertion groove (15) at an inner side of the housing (10) in the side towards the outlet (12) to receive the ball (35) inserted in the end of the second shaft (36) so that the ball (35) is prevented from being separated.

7. The external inline LPG fuel pump according to claim 2, wherein the carrier (21) comprises:
a through-aperture (1) formed in the center so as to be connected to the first shaft (32) of the motor part (30);
a round protrusion part (2) formed at one surface around the through-aperture (1); and
a number of groove parts (3) formed in the circumferential direction of the round protrusion part (2) around the through-aperture (1) so that both sides of the carrier (21) have the equal pressure, to prevent any noise and damage caused by friction when the carrier 21 is pushed to one side by the pressure of the fuel.

8. The external inline LPG fuel pump according to claim 7, wherein the groove parts (3) comprises each groove formed having a predetermined length from an outer circumferential edge of the round protrusion part (2) towards an inner circumferential edge of the round protrusion part (2), and the groove parts (3) are formed in a spiral shape in the manner that each groove progressively becomes narrower in width towards the inner circumferential edge of the round protrusion part (2), so that the carrier (21) is pushed to the side opposing to the groove parts (3) through increasing pressure when the fuel is introduced into the groove parts (3).

9. The external inline LPG fuel pump according to claim 7, wherein the groove parts (3) comprises each groove formed having a predetermined length from the inner circumferential edge of the round protrusion part (2) towards the outer circumferential edge of the round protrusion part (2), and the groove parts (3) are formed in a spiral shape in the manner that each groove progressively becomes wider in width towards the outer circumferential edge of the round protrusion part (2), so that the carrier (21) is pushed to the side opposing to the groove parts (3) through increasing pressure when the fuel is introduced into the groove parts (3).

10. The external inline LPG fuel pump according to claim 7, wherein the groove parts (3) are further formed in a herringbone shape in the manner that each groove progressively becomes narrower in width towards the inner circumferential edge of the round protrusion part (2), so that the carrier (21) is pushed to the side opposing to the groove parts (3) through increasing pressure when the fuel is introduced into the groove parts (3).

11. The external inline LPG fuel pump according to claim 7, wherein the groove parts (3) are further formed in a fan-shape with respect to the round protrusion part (2) as a center, so that the carrier (21) is pushed to the side opposing to the groove parts (3) through increasing pressure when the fuel is introduced into the groove parts (3).

12. The external inline LPG fuel pump according to claim 1, wherein the center part of the housing (10) towards the outlet (12) side comprises a ball (35) integrally coupled with the housing (10) that contacts with the end of the second shaft (36) of the motor part (30) so that the second shaft (36) is smoothly rotated.

13. The external inline LPG fuel pump according to claim 1, further comprising: a case (50) positioned outside the housing (10) and including a number of outlets (51) to cool the high-temperature LPG fuel discharged through the outlet (12) of the housing (10) through the pumping part (20) and the motor part (30), thereby decreasing heat load and discharging the fuel outwardly.

14. The external inline LPG fuel pump according to claim 10, wherein the case (50) has its hollow inside where the housing (10) is positioned and a partition (52) is formed to cool the high-temperature LPG fuel through circulating in a number of channels.

15. The external inline LPG fuel pump according to claim 1, wherein the inlet (11) is formed at a lateral surface of the housing (10).
